(19) Europäisches Patentamt
European Patent Office
Office européen des brevets

(11) **EP 3 200 534 A1**

(12) **EUROPEAN PATENT APPLICATION**
published in accordance with Art. 153(4) EPC

(43) Date of publication:
**02.08.2017 Bulletin 2017/31**

(51) Int Cl.:
**H04W 72/04** *(2009.01)*  **H04W 72/12** *(2009.01)*

(21) Application number: **15845192.2**

(22) Date of filing: **25.09.2015**

(86) International application number:
**PCT/KR2015/010221**

(87) International publication number:
**WO 2016/048096 (31.03.2016 Gazette 2016/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **25.09.2014 US 201462055637 P**
**07.11.2014 US 201462076495 P**
**01.04.2015 US 201562141843 P**

(71) Applicant: **LG Electronics Inc.**
**Seoul 07336 (KR)**

(72) Inventors:
• **CHAE, Hyukjin**
**Seoul 06772 (KR)**
• **SEO, Hanbyul**
**Seoul 06772 (KR)**
• **Jung, Sunghoon**
**Seoul 06772 (KR)**

(74) Representative: **Frenkel, Matthias Alexander**
**Wuesthoff & Wuesthoff**
**Patentanwälte PartG mbB**
**Schweigerstrasse 2**
**81541 München (DE)**

(54) **METHOD AND DEVICE WHEREBY DEVICE-TO-DEVICE TERMINAL TRANSMITS SIGNALS IN ORDER OF PRIORITY IN WIRELESS COMMUNICATION SYSTEM**

(57) One embodiment of the present invention relates to a method whereby a device-to-device (D2D) terminal transmits signals in a wireless communication system, the D2D signal transmission method comprising the steps of: determining a resource pool from among resource pools classified in order of priority; determining resources in which to transmit D2D packets by applying the order of priority of the D2D packets to be transmitted in the determined resource pool; and transmitting the D2D packets via the determined resources.

FIG. 8

(a) Conventional

(b) Proposed

**Description**

TECHNICAL FIELD

The present invention relates to a wireless communication system, and more particularly, to a method of transmitting a signal according to priority in a device-to-device communication and an apparatus therefor.

BACKGROUND ART

Wireless communication systems have been widely deployed to provide various types of communication services such as voice or data. In general, a wireless communication system is a multiple access system that supports communication of multiple users by sharing available system resources (a bandwidth, transmission power, etc.) among them. For example, multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi-Carrier Frequency Division Multiple Access (MC-FDMA) system.

D2D communication is a communication scheme in which a direct link is established between User Equipments (UEs) and the UEs exchange voice and data directly with each other without intervention of an evolved Node B (eNB). D2D communication may cover UE-to-UE communication and peer-to-peer communication. In addition, D2D communication may find its applications in Machine-to-Machine (M2M) communication and Machine Type Communication (MTC).

D2D communication is under consideration as a solution to the overhead of an eNB caused by rapidly increasing data traffic. For example, since devices exchange data directly with each other without intervention of an eNB by D2D communication, compared to legacy wireless communication, the overhead of a network may be reduced. Further, it is expected that with the introduction of D2D communication will reduce the power consumption of devices participating in D2D communication, increase data transmission rates, increase the accommodation capability of a network, distribute load, and extend cell coverage.

DISCLOSURE OF THE INVENTION

TECHNICAL TASK

A technical task of the present invention is to apply priority to a resource in which a D2D synchronization signal is transmitted.

Technical tasks obtainable from the present invention are non-limited by the above-mentioned technical task. And, other unmentioned technical tasks can be clearly understood from the following description by those having ordinary skill in the technical field to which the present invention pertains.

TECHNICAL SOLUTION

To achieve these and other advantages and in accordance with the purpose of the present invention, as embodied and broadly described, according to one embodiment, a method of transmitting a signal, which is transmitted by a D2D (device to device) user equipment in a wireless communication system, includes the steps of determining a resource pool from among resource pools classified according to a priority, determining a resource for transmitting a D2D packet by applying a priority of the D2D packet to the determined resource pool, and transmitting the D2D packet through the determined resource.

To further achieve these and other advantages and in accordance with the purpose of the present invention, according to a different embodiment, a user equipment transmitting a D2D (device to device) signal in a wireless communication system includes a transmitter and a receiver, and a processor, the processor configured to determine a resource pool from among resource pools classified according to a priority, the processor configured to determine a resource for transmitting a D2D packet by applying a priority of the D2D packet to the determined resource pool, the processor configured to transmit the D2D packet through the determined resource.

A TRP (time resource pattern) can be used when the resource for transmitting the D2D packet is determined.

The TRP can be included in a TRP subset which is classified according to the priority of the D2D packet.

The TRP may correspond to a bitmap indicating a subframe in which transmission of a D2D signal is permitted.

If the priority of the D2D packet is higher, a TRP including more 1's can be used.

If the TRP including more 1's is used, the number of repetitive transmission per MAC PDU (medium access layer protocol data unit) can increase as well.

If the D2D packet corresponds to an MCPTT (mission critical push to talk) packet, the D2D packet may have a highest priority.

ADVANTAGEOUS EFFECTS

According to embodiments of the present invention, it is able to efficiently transmit a D2D signal according to priority.

Effects obtainable from the present invention are non-limited by the above mentioned effect. And, other unmentioned effects can be clearly understood from the following description by those having ordinary skill in the technical field to which the present invention pertains.

DESCRIPTION OF DRAWINGS

The accompanying drawings, which are included to provide a further understanding of the invention and are incorporated in and constitute a part of this specification, illustrate embodiments of the invention and together with the description serve to explain the principles of the invention.

> FIG. 1 is a diagram for a structure of a radio frame;
> FIG. 2 is a diagram for a resource grid in a downlink slot;
> FIG. 3 is a diagram for a structure of a downlink subframe;
> FIG. 4 is a diagram for a structure of an uplink subframe;
> FIG. 5 is a diagram for explaining relaying of a synchronization signal;
> FIG. 6 is a diagram for explaining a resource pool;

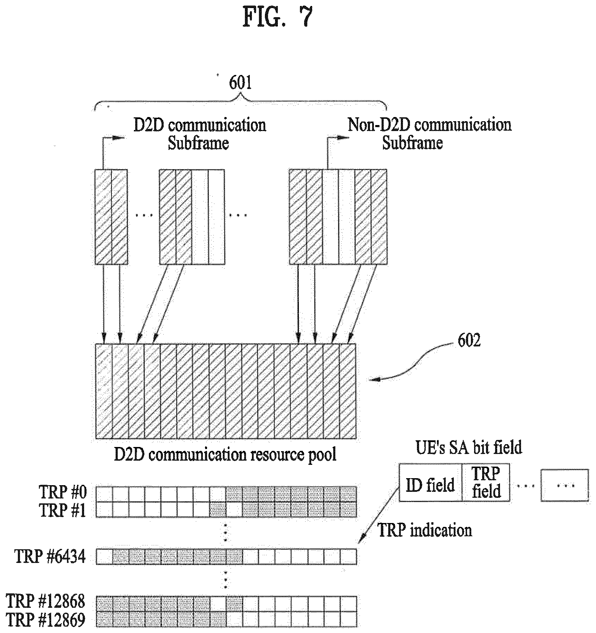

> FIG. 7 is a diagram for explaining a time resource pattern;
> FIGS. 8 and 9 are diagrams for explaining priority configuration and a time resource pattern according to embodiments of the present invention;
> FIG. 10 is a diagram for configurations of a transmitter and a receiver.

BEST MODE

MODE FOR INVENTION

The embodiments described below are constructed by combining elements and features of the present invention in a predetermined form. The elements or features may be considered selective unless explicitly mentioned otherwise. Each of the elements or features can be implemented without being combined with other elements. In addition, some elements and/or features may be combined to configure an embodiment of the present invention. The sequence of the operations discussed in the embodiments of the present invention may be changed. Some elements or features of one embodiment may also be included in another embodiment, or may be replaced by corresponding elements or features of another embodiment.

Embodiments of the present invention will be described, focusing on a data communication relationship between a base station and a terminal. The base station serves as a terminal node of a network over which the base station directly communicates with the terminal. Specific operations illustrated as being conducted by the base station in this specification may also be conducted by an upper node of the base station, as necessary.

In other words, it will be obvious that various operations allowing for communication with the terminal in a network composed of several network nodes including the base station can be conducted by the base station or network nodes other than the base station. The term "base station (BS)" may be replaced with terms such as "fixed station," "Node-B," "eNode-B (eNB)," and "access point". The term "relay" may be replaced with such terms as "relay node (RN)" and "relay station (RS)". The term "terminal" may also be replaced with such terms as "user equipment (UE)," "a mobile station (MS)," "mobile subscriber station (MSS)" and "subscriber station (SS)". A base station can be used as a meaning indicating a scheduling node, a cluster head, and the like. If a base station or a relay transmits a signal transmitted by a terminal, the base station or the relay can be regarded as a terminal.

In the following, such a term as a cell is applied to such a transmission/reception point as a base station (eNB), a sector, a remote radio head (RRH), and the like. The cell can be used as a comprehensive term to identify a component carrier in a specific transmission/reception point.

It should be noted that specific terms disclosed in the present invention are proposed for convenience of description and better understanding of the present invention, and these specific terms may be changed to other formats within the technical scope or spirit of the present invention.

In some cases, known structures and devices may be omitted or block diagrams illustrating only key functions of the structures and devices may be provided, so as not to obscure the concept of the present invention. The same reference numbers will be used throughout this specification to refer to the same or like parts.

Exemplary embodiments of the present invention are supported by standard documents disclosed for at least one of wireless access systems including an institute of electrical and electronics engineers (IEEE) 802 system, a 3rd generation partnership project (3GPP) system, a 3GPP long term evolution (LTE) system, an LTE-advanced (LTE-A) system, and a 3GPP2 system. In particular, steps or parts, which are not described in the embodiments of the present invention to prevent obscuring the technical spirit of the present invention, may be supported by the above documents. All terms used herein may be supported by the above-mentioned documents.

The embodiments of the present invention described below can be applied to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be embodied through wireless technologies such as universal terrestrial radio access (UTRA) or CDMA2000. TDMA may be embodied through wireless technologies such as global system for mobile communication (GSM)/general packet radio service (GPRS)/enhanced data rates for GSM evolution (EDGE). OFDMA may be embodied through wireless technologies such as IEEE 802.11 (Wi-Fi), IEEE 802.16 (WiMAX), IEEE 802-20, and evolved UTRA (E-UTRA). UTRA is a part of universal mobile telecommunications system (UMTS). 3rd generation partnership project (3GPP) long term evolution (LTE) is a part of evolved UMTS (E-UMTS), which uses E-UTRA. 3GPP LTE employs OFDMA for downlink and employs SC-FDMA for uplink. LTE-Advanced (LTE-A) is an evolved version of 3GPP LTE. WiMAX can be explained by IEEE 802.16e (wirelessMAN-OFDMA reference system) and advanced IEEE 802.16m (wirelessMAN-OFDMA advanced system). For clarity, the following description focuses on 3GPP LTE and 3GPP LTE-A systems. However, the spirit of the present invention is not limited thereto.

LTE/LTE-A Resource Structure/Channel

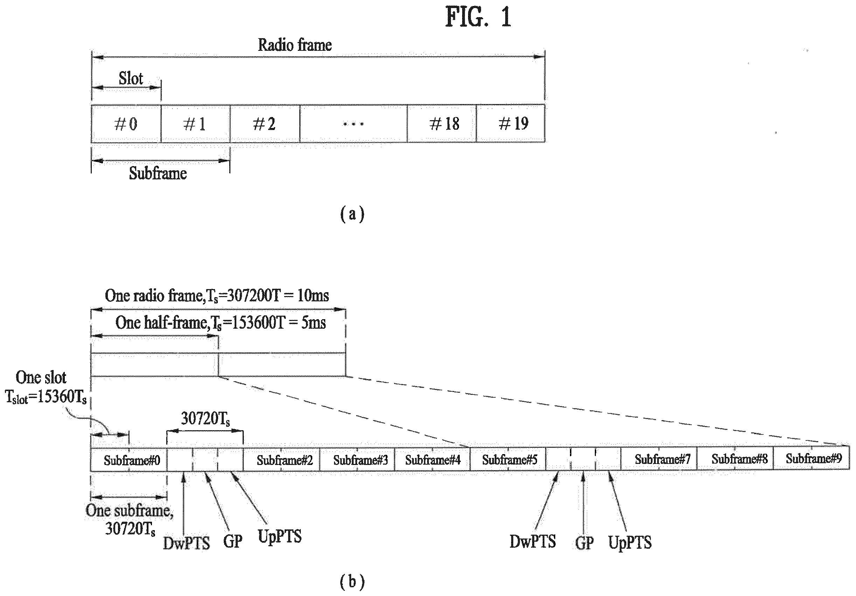

Hereinafter, a radio frame structure will be described with reference to FIG. 1.

In a cellular OFDM wireless packet communication system, an uplink (UL)/downlink (DL) data packet is transmitted on a subframe basis, and one subframe is defined as a predetermined time interval including a plurality of OFDM symbols. 3GPP LTE standard supports a type-1 radio frame structure applicable to frequency division duplex (FDD) and a type-2 radio frame structure applicable to time division duplex (TDD).

FIG. 1(a) illustrates the type-1 radio frame structure. A downlink radio frame is divided into ten subframes. Each subframe includes two slots in the time domain. The time taken to transmit one subframe is defined as a transmission time interval (TTI). For example, a subframe may have a duration of 1 ms and one slot may have a duration of 0.5 ms. A slot may include a plurality of OFDM symbols in the time domain and includes a plurality of resource blocks (RBs) in the frequency domain. Since 3GPP LTE adopts OFDMA for downlink, an OFDM symbol represents one symbol period. An OFDM symbol may be referred to as an SC-FDMA symbol or a symbol period. A resource block (RB), which is a resource allocation unit, may include a plurality of consecutive subcarriers in a slot.

The number of OFDM symbols included in one slot depends on the configuration of a cyclic prefix (CP). CPs are divided into an extended CP and a normal CP. For a normal CP configuring each OFDM symbol, a slot may include 7 OFDM symbols. For an extended CP configuring each OFDM symbol, the duration of each OFDM symbol extends and thus the number of OFDM symbols included in a slot is smaller than in the case of the normal CP. For the extended CP, a slot may include, for example, 6 OFDM symbols. When a channel status is unstable as in the case of high speed movement of a UE, the extended CP may be used to reduce inter-symbol interference.

When the normal CP is used, each slot includes 7 OFDM symbols, and thus each subframe includes 14 OFDM symbols. In this case, the first two or three OFDM symbols of each subframe may be allocated to a physical downlink control channel (PDCCH) and the other three OFDM symbols may be allocated to a physical downlink shared channel (PDSCH).

FIG. 1(b) illustrates the type-2 radio frame structure. The type-2 radio frame includes two half frames, each of which has 5 subframes, a downlink pilot time slot (DwPTS), a guard period (GP), and an uplink pilot time slot (UpPTS). Each subframe includes two slots. The DwPTS is used for initial cell search, synchronization, or channel estimation in a UE, whereas the UpPTS is used for channel estimation in an eNB and UL transmission synchronization in a UE. The GP is provided to eliminate interference taking place in UL due to multipath delay of a DL signal between DL and UL. Regardless of the type of a radio frame, a subframe of the radio frame includes two slots.

Herein, the illustrated radio frame structures are merely examples, and various modifications may be made to the number of subframes included in a radio frame, the number of slots included in a subframe, or the number of symbols included in a slot.

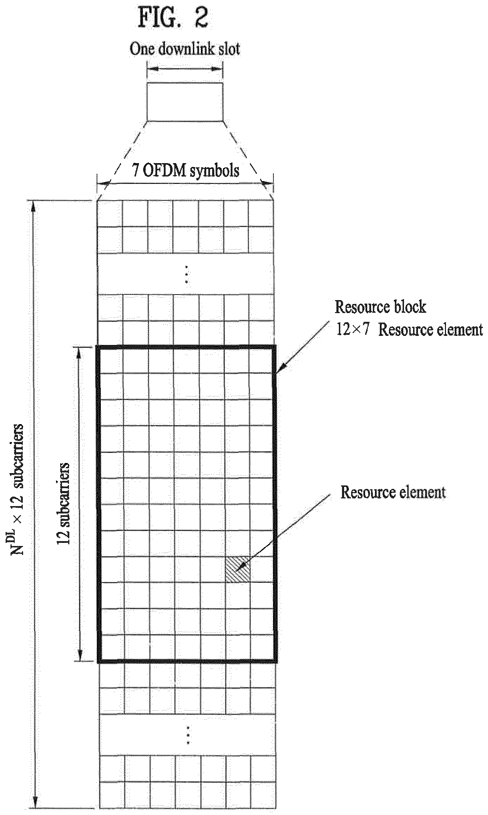

FIG. 2 is a diagram illustrating a resource grid for one DL slot. A DL slot includes 7 OFDM symbols in the time domain and an RB includes 12 subcarriers in the frequency domain. However, embodiments of the present invention are not limited thereto. For a normal CP, a slot may include 7 OFDM symbols. For an extended CP, a slot may include 6 OFDM symbols. Each element in the resource grid is referred to as a resource element (RE). An RB includes 12 7 REs. The number NDL of RBs included in a downlink slot depends on a DL transmission bandwidth. A UL slot may have the same structure as a DL slot.

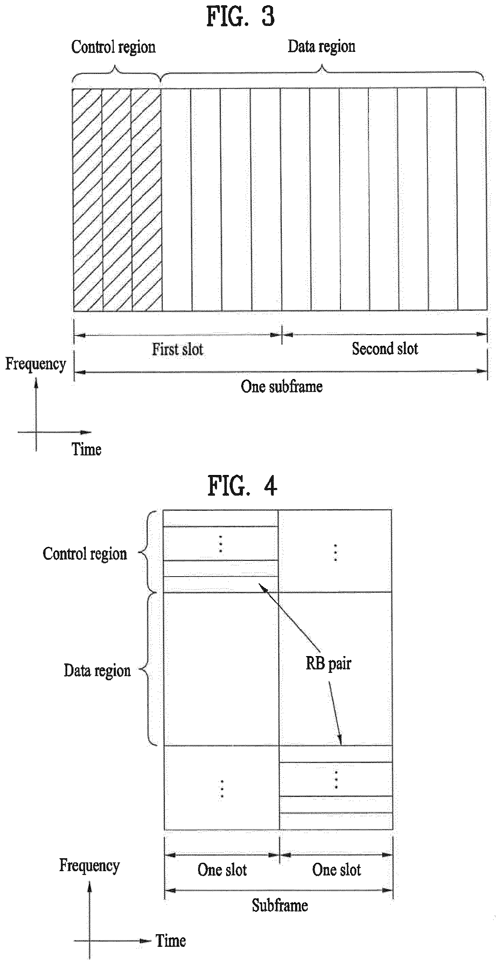

FIG. 3 illustrates a DL subframe structure. Up to the first three OFDM symbols of the first slot in a DL subframe used as a control region to which control channels are allocated and the other OFDM symbols of the DL subframe are used as a data region to which a PDSCH is allocated. DL control channels used in 3GPP LTE include, for example, a physical control format indicator channel (PCFICH), a physical downlink control channel (PDCCH), and a physical hybrid automatic repeat request (HARQ) indicator channel (PHICH). The PCFICH is transmitted at the first OFDM symbol of a subframe, carrying information about the number of OFDM symbols used for transmission of control channels in the subframe. The PHICH carries a HARQ ACK/NACK signal in response to uplink transmission. Control information carried on the PDCCH is called downlink control information (DCI). The DCI includes UL or DL scheduling information or UL transmission power control commands for UE groups. The PDCCH delivers information about resource allocation and a transport format for a DL shared channel (DL-SCH), resource allocation information about an UL shared channel (UL-SCH), paging information of a paging channel (PCH), system information on the DL-SCH, information about resource allocation for a higher-layer control message such as a random access response transmitted on the PDSCH, a set of transmission power control commands for individual UEs of a UE group, transmission power control information, and voice over internet protocol (VoIP) activation information. A plurality of PDCCHs may be transmitted in the control region. A UE may monitor a plurality of PDCCHs. A PDCCH is formed by aggregating one or more consecutive control channel elements (CCEs). A CCE is a logical allocation unit used to provide a PDCCH at a coding rate based on the state of a radio channel. A CCE corresponds to a plurality of RE groups. The format of a PDCCH and the number of available bits for the PDCCH are determined depending on the correlation between the number of CCEs and a coding rate provided by the CCEs. An eNB determines the PDCCH format according to DCI transmitted to a UE and adds a cyclic redundancy check (CRC) to the control information. The CRC is masked by an identifier (ID) known as a radio network temporary identifier (RNTI) according to the owner or usage of the PDCCH. If the PDCCH is directed to a specific UE, its CRC may be masked by a cell-RNTI (C-RNTI) of the UE. If the PDCCH is for a paging message, the CRC of the PDCCH may be masked by a paging indicator identifier (P-RNTI). If the PDCCH delivers system information, particularly, a system information block (SIB), the CRC thereof may be masked by a system information ID and a system information RNTI (SI-RNTI). To indicate that the PDCCH delivers a random access response in response to a random access preamble transmitted by a UE, the CRC thereof may be masked by a random access-RNTI (RA-RNTI).

FIG. 4 illustrates a UL subframe structure. A UL subframe may be divided into a control region and a data region in the frequency domain. A physical uplink control channel (PUCCH) carrying uplink control information is allocated to the control region and a physical uplink shared channel (PUSCH) carrying user data is allocated to the data region. To maintain single carrier property, a UE does not simultaneously transmit a PUSCH and a PUCCH. A PUCCH for a UE is allocated to an RB pair in a subframe. The RBs of the RB pair occupy different subcarriers in two slots. This is often called frequency hopping of the RB pair allocated to the PUCCH over a slot boundary.

Synchronization Acquisition of D2D UE

Now, a description will be given of synchronization acquisition between UEs in D2D communication based on the foregoing description in the context of the legacy LTE/LTE-A system. In an OFDM system, if time/frequency synchronization is not acquired, the resulting Inter-Cell Interference (ICI) may make it impossible to multiplex different UEs in an OFDM signal. If each individual D2D UE acquires synchronization by transmitting and receiving a synchronization signal directly, this is inefficient. In a distributed node system such as a D2D communication system, therefore, a specific node may transmit a representative synchronization signal and the other UEs may acquire synchronization using the representative synchronization signal. In other words, some nodes (which may be an eNB, a UE, and a Synchronization Reference Node (SRN, also referred to as a synchronization source)) may transmit a D2D Synchronization Signal (D2DSS) and the remaining UEs may transmit and receive signals in synchronization with the D2DSS.

D2DSSs may include a Primary D2DSS (PD2DSS) or a Primary Sidelink Synchronization Signal (PSSS) and a Secondary D2DSS (SD2DSS) or a Secondary Sidelink Synchronization Signal (SSSS). The PD2DSS may be configured to have a similar/modified/repeated structure of a Zadoff-chu sequence of a predetermined length or a Primary Synchronization Signal (PSS), and the SD2DSS may be configured to have a similar/modified/repeated structure of an M-sequence or a Secondary Synchronization Signal (SSS). If UEs synchronize their timing with an eNB, the eNB serves as an SRN and the D2DSS is a PSS/SSS. A Physical D2D Synchronization Channel (PD2DSCH) may be a (broadcast) channel carrying basic (system) information that a UE should first obtain before D2D signal transmission and reception (e.g., D2DSS-related information, a Duplex Mode (DM), a TDD UL/DL configuration, a resource pool-related information, the type of an application related to the D2DSS, etc.). The PD2DSCH may be transmitted in the same subframe as the D2DSS or in a sub frame subsequent to the frame carrying the D2DSS.

The SRN may be a node that transmits a D2DSS and a PD2DSCH. The D2DSS may be a specific sequence and the PD2DSCH may be a sequence representing specific information or a codeword produced by predetermined channel coding. The SRN may be an eNB or a specific D2D UE. In the case of partial network coverage or out of network coverage, the SRN may be a UE.

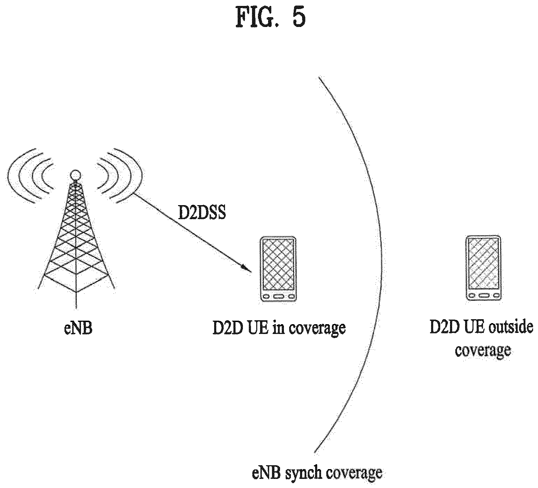

In a situation illustrated in FIG. 5, a D2DSS may be relayed for D2D communication with an out-of-coverage UE. The D2DSS may be relayed over multiple hops. The following description is given with the appreciation that relay of an SS covers transmission of a D2DSS in a separate format according to a SS reception time as well as direct Amplify-and-Forward (AF)-relay of an SS transmitted by an eNB. As the D2DSS is relayed, an in-coverage UE may communicate directly with an out-of-coverage UE. FIG. 5 illustrates an exemplary case in which a D2DSS is relayed and communication is conducted between D2D UEs based on the relayed D2DSS.

## D2D resource pool

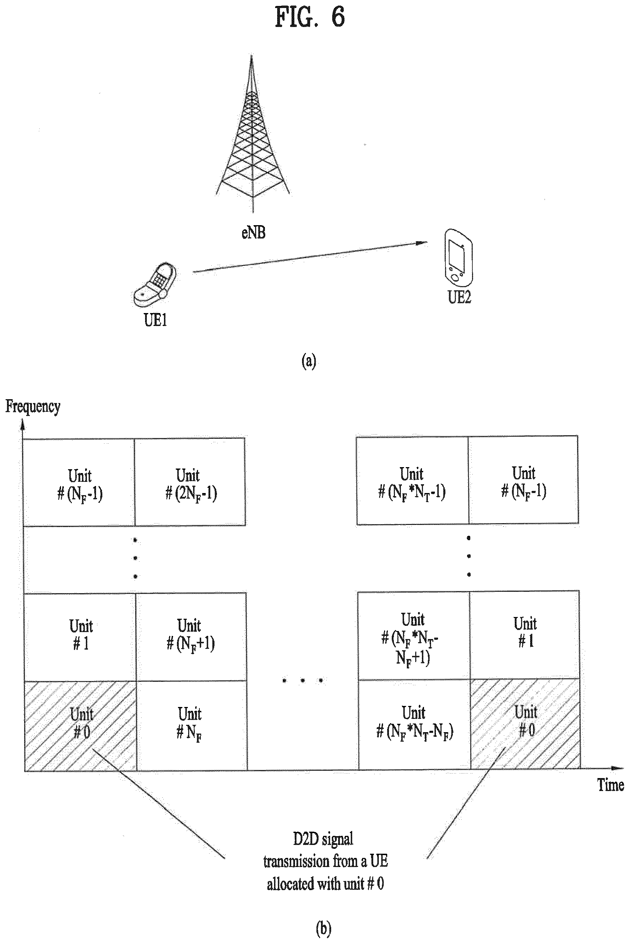

FIG. 6 shows an example of a UE1, a UE2 and a resource pool used by the UE1 and the UE2 performing D2D communication. In FIG. 6 (a), a UE corresponds to a terminal or such a network device as an eNB transmitting and receiving a signal according to a D2D communication scheme. A UE1 selects a resource unit corresponding to a specific resource from a resource pool corresponding to a set of resources and the UE1 transmits a D2D signal using the selected resource unit. A UE2 corresponding to a reception UE receives a configuration of a resource pool in which the UE1 is able to transmit a signal and detects a signal of the UE1 in the resource pool. In this case, if the UE1 is located at the inside of coverage of an eNB, the eNB can inform the UE1 of the resource pool. If the UE1 is located at the outside of coverage of the eNB, the resource pool can be informed by a different UE or can be determined by a predetermined resource. In general, a resource pool includes a plurality of resource units. A UE selects one or more resource units from among a plurality of the resource units and may be able to use the selected resource unit(s) for D2D signal transmission. FIG. 6(b) shows an example of configuring a resource unit. Referring to FIG. 6 (b), the entire frequency resources are divided into the $N_F$ number of resource units and the entire time resources are divided into the $N_T$ number of resource units. In particular, it is able to define $N_F*N_T$ number of resource units in total. In particular, a resource pool can be repeated with a period of $N_T$ subframes. Specifically, as shown in FIG. 6, one resource unit may periodically and repeatedly appear. Or, an index of a physical resource unit to which a logical resource unit is mapped may change with a predetermined pattern according to time to obtain a diversity gain in time domain and/or frequency domain. In this resource unit structure, a resource pool may correspond to a set of resource units capable of being used by a UE intending to transmit a D2D signal.

A resource pool can be classified into various types. First of all, the resource pool can be classified according to contents of a D2D signal transmitted via each resource pool. For example, the contents of the D2D signal can be classified into various signals and a separate resource pool can be configured according to each of the contents. The contents of the D2D signal may include SA (scheduling assignment), a D2D data channel, and a discovery channel. The SA may correspond to a signal including information on a resource position of a D2D data channel, information on MCS (modulation and coding scheme) necessary for modulating and demodulating a data channel, information on a MIMO transmission scheme, information on TA (timing advance), and the like. The SA signal can be transmitted on an identical resource unit in a manner of being multiplexed with D2D data. In this case, an SA resource pool may correspond to a pool of resources that an SA and D2D data are transmitted in a manner of being multiplexed. The SA signal can also be referred to as a D2D control channel or a PSCCH (physical sidelink control channel). The D2D data channel (or, PSSCH (physical sidelink shared channel)) corresponds to a resource pool used by a transmission UE to transmit user data. If an SA signal and a D2D data channel are transmitted in a manner of being multiplexed in an identical resource unit, D2D data channel except SA information can be transmitted only in a resource pool for the D2D data channel. In other word, resource elements (REs), which are used to transmit SA information in a specific resource unit of an SA resource pool, can also be used for transmitting D2D data in a D2D data channel resource pool. The discovery signal may correspond to a resource pool for a message that enables a neighboring UE to discover a transmission UE transmitting information such as ID of the UE, and the like.

Although contents of D2D signal are identical to each other, it may use a different resource pool according to a transmission/reception attribute of the D2D signal. For example, in case of the same D2D data channel or the same discovery message, the D2D data channel or the discovery signal can be classified into a different resource pool according to a transmission timing determination scheme (e.g., whether a D2D signal is transmitted at the time of receiving a synchronization reference signal or the timing to which a prescribed timing advance is added) of a D2D signal, a resource allocation scheme (e.g., whether a transmission resource of an individual signal is designated by an eNB or an individual transmission UE selects an individual signal transmission resource from a pool), and a signal format (e.g., number of symbols occupied by a D2D signal in a subframe, number of subframes used for transmitting a D2D signal). For clarity, a method for an eNB to directly designate a transmission resource of a D2D transmission UE is referred to as a mode 1. If a transmission resource region is configured in advance or an eNB designates the transmission resource region and a UE directly selects a transmission resource from the transmission resource region, it is referred to as a mode 2.

In case of performing D2D discovery, if an eNB directly indicates a resource, it is referred to as a type 2. If a UE directly selects a transmission resource from a predetermined resource region or a resource region indicated by the eNB, it is referred to as a type 1.

**TRP**

In the following, a TRP (time resource pattern) is explained when a UE transmits data, a discovery signal, and the like. The TRP can also be called as RPT (resource pattern transmission), T-RPT (time-RPT), and the like. In the following description, a scheme of indicating a location of a transmission resource indicated by an eNB/UE corresponds to a mode 1/type 2 and a scheme of indicating (selecting) a location of a transmission resource from a specific resource pool indicated (selected) by a UE corresponds to a mode 2/type 1. And, in the following description, SA (scheduling assignment) corresponds to a channel on which control information related to D2D data transmission and control information are transmitted. The SA can also be called as a PSBCH (physical broadcast channel). The SA is preferentially transmitted before data is transmitted. A D2D signal reception UE decodes the SA first and identifies a resource position at which data indicated by the SA is transmitted. Then, the D2D reception UE can receive a D2D signal in the identified resource. And, in the following description, D2D can also be called as sidelink. In the following, for clarity, it may use such a term as a TRP indication bit sequence. The bit sequence may consist of IDs included in the SA only. If an additional bit field is included in the SA to indicate the TRP, 'ID + TRP bit sequence' can be comprehended as the TRP indication bit sequence. Or, the SA may include ID and a bit sequence for indicating an independent TRP. In this case, the TRP bit sequence can be comprehended as the TRP indication bit sequence. A bit sequence set, which is transmitted in a manner of being included in the SA and used to indicate the TRP, can be comprehended as the TRP indication bit sequence.

FIG. 6 illustrates TRPs according to an embodiment of the present invention. Referring to FIG. 6, a plurality of subframes 601 may include sub frames available for D2D signal transmission and reception (e.g., UL subframes in TDD, and D2D communication subframes in FIG. 6) and subframes unavailable for D2D signal transmission and reception (non-D2D communication subframes in FIG. 6). The plurality of subframes 601 may be included within a D2D control information transmission period (e.g., a physical sidelink control channel). A subframe pool 602 for data transmission may be determined, which includes only D2D communication subframes from among the plurality of subframes 601.

As TRPs (TRP #0, #1, ...) are applied to the subframe pool 602 for data transmission, a set of subframes to transmit D2D data may be determined. For example, if TRP #1 is applied to the subframe pool 602 for data transmission, an 8$^{th}$ subframe and 10$^{th}$ to 16$^{th}$ subframes may be included in a subframe set, for D2D data transmission. Shaded parts of the TRPs in FIG. 16 may indicate subframes that will carry D2D data. A TRP may be a bitmap having bits corresponding to the respective subframes of a subframe pool for data transmission. If a bit of the bitmap is set to 1, the bit may indicate a subframe to transmit D2D data. Specifically, if a TRP is configured to be a bitmap, the shaded parts of the TRP may be 1s and the non-shaded parts of the TRP may be 0s in FIG. 6. For example, TRP #1 is a bitmap of {0, 0, 0, 0, 0, 0, 0, 1, 0, 1, 1, 1, 1, 1, 1, 1}.

Once a subframe set is determined for transmission of D2D data, the D2D data may be transmitted in the subframe set. Upon receipt of an SA, a UE may detect and decode a D2D signal in corresponding subframes, expecting transmission of the D2D signal in the subframes.

In the above description, a Transport Block (TB) for D2D data may be transmitted in a predetermined number of subframes in a subframe set. That is, the number of repetitions/a retransmission number/the number of retransmissions may be predetermined for each TB. For example, the number of retransmissions per TB may be fixed to 4.

The above-described plurality of subframes may be contiguous subframes following D2D control information-related subframes (including UL subframes that may carry D2D control information, DL subframes with no relation to the UL subframes, and special subframes in TDD) in one D2D control information period (i.e., one SA period). The D2D control information (an SA, an MCS, resource allocation information, a TRP, etc.) may be transmitted in subframes determined to transmit D2D control information (i.e., a subframe pool (for D2D control information)) from among subframes available for transmission of D2D control information according to an SA subframe bitmap. In this case, information indicating a TRP in a subframe next to the subframe pool for D2D control information may be transmitted in the D2D control information. If one SA period is configured as described above, subframes included in a subframe pool for data transmission are not overlapped with subframes included in a subframe pool for D2D control information. More specifically, if the subframe pool for D2D control information is overlapped with the subframe pool for D2D data transmission, it may be regulated that D2D control information or D2D data is always transmitted and the D2D control information and the D2D data are not transmitted in the same subframe.

Meanwhile, the subframe pool for data transmission may not be defined separately in D2D communication mode 1. In this case, UL subframes following the subframe pool for D2D control information transmission (specifically, a subframe pool including the first subframe of a subframe bitmap for D2D control information transmission to a subframe corresponding to the last 1 of the bitmap) may be a subframe pool for implicit mode 1 D2D data transmission.

Application of TRP

In the foregoing description, a TRP may be applied to subframes as follows.

A UE may determine a subframe indicator bitmap corresponding to TRP indication information. If the UE is a D2D control information transmitter, the TRP indication information may be transmitted in D2D control information. If the UE is a D2D control information receiver, the TRP indication information may be included in received D2D control information. Herein, the TRP indication information may be described in a later-described TRP indication part or may be an index indicating a specific subframe indicator bitmap. For example, if the size of the subframe indicator bitmap is 8, there may be a set of available bitmaps. An index may be assigned to each bitmap included in the bitmap set and a subframe indicator bitmap may be determined by such as index.

A bitmap to be applied to a subframe pool for data transmission may be determined from the subframe indicator bitmap. The subframe indicator bitmap may be smaller than the subframe pool for data transmission in size. In this case, the subframe indicator bitmap (e.g., a TRP indication bit sequence) may be repeated. If the length of the TRP indication bit sequence is M, the M-bit sequence is simply repeated and filled in the remaining L subframes. If L is not a multiple of M, a TRP may be generated by sequentially filling the remaining bit sequence in the L subframes.

That is, if the subframe indicator bitmap is smaller in size than the subframe pool for data transmission, the subframe indicator bitmap may be repeated within the bitmap for the subframe pool for data transmission.

For example, if the size M of the subframe indicator bitmap is smaller than the number of subframes in the resource pool for data transmission and the UE transmits D2D data in the first subframe of the subframe pool for data transmission, the UE may transmit D2D data in a $(1+M)^{th}$ subframe of the subframe pool. Or a first bit value of the bitmap (to be applied to the subframe pool for data transmission) may be equal to a (subframe indicator bitmap size + 1)$^{th}$ bit value.

If the size of the subframe pool for data transmission is not a multiple of the size of the subframe indicator bitmap, the bits of the last repeated subframe indicator bitmap may be used sequentially. In other words, if the size of the subframe pool for data transmission is not a multiple of the size of the subframe indicator bitmap, the last repeated subframe indicator bitmap may be truncated. Specifically, if the subframe indicator bitmap is 16 bits {0, 0, 0, 0, 0, 0, 0, 1, 0, 1, 1, 1, 1, 1, 1, 1} and the subframe pool includes 36 subframes, the bitmap (to be applied to a subframe pool for data transmission) is configured by repeating the subframe indicator bitmap twice and using the first 4 bits of the subframe indicator bitmap sequentially at the third repetition (while truncating the remaining bits). That is, the bitmap (to be applied to the subframe pool for data transmission) is {0, 0, 0, 0, 0, 0, 0, 1, 0, 1, 1, 1, 1, 1, 1, 0, 0, 0, 0, 0, 0, 0, 1, 0, 1, 1, 1, 1, 1, 1, 1, 0, 0, 0, 0}.

Indication of TRP

Now, a description will be given of a method for indicating the above-described TRP.

First, an eNB may indicate an ID and TRP bits included and transmitted in an SA by a D2D SA grant in mode 1. The ID sequence included in the SA and/or the sequence of a TRP bit field included in the SA (a bit field indicating a specific ID and/or a TRP) may be explicitly included in the D2D SA grant. Or the ID sequence to be transmitted in the SA and/or the TRP bit field to be transmitted in the SA may be generated by hashing the bit sequence of a D2D-RNTI or using partial bits (e.g., lower N bits) of the bit sequence of the D2D-RNTI. Because an RNTI is different for each UE and at least a part of the RNTI is used, the position of D2D resources may be configured for each UE without additional signaling. A D2D-RNTI is an ID pre-signaled to distinguish D2D control information from other control information and is used for masking the CRC of the D2D control information. A part of the ID included and transmitted in the SA may be generated from the RNTI and the remaining part of the ID may be generated based on a target ID (or a group ID). Or the ID may be generated by combining (e.g., AND/XOR/OR-operating) both the RNTI and the target or group ID. The ID included and transmitted in the SA may be changed over time. Characteristically, only a Transmission (Tx) UE ID may be changed. This is because if up to a target UE ID part is hopped and a target UE is not aware of the hopping, the target UE may not detect the ID. If the target UE is aware of even a hopping pattern of the target UE ID part, every ID sequence included in the SA may be hopped in a predetermined rule. The changeability (hopping) of the ID sequence over time may be implemented by directly setting a different bit field in a D2D SA grant by the eNB and the ID sequence may be changed in a predetermined rule after the D2D SA grant of the eNB. For example, the ID sequence included in the D2D SA grant may be used as an initialization parameter for a random sequence and a time-variant sequence may be generated using a random sequence created using the initialization parameter.

Second, an ID may be transmitted in an SA and a TRP may be determined using the ID in mode 2. The ID may be a short ID induced from an ID (a transmission and/or reception (target or group) ID) by a higher layer or a bit sequence used to configure the transmission position of data and a scrambling parameter. If the ID included in the SA is too short for creation of TRP candidates, the probability of collision between IDs is increased. In this case, a plurality of Tx UEs are likely to use the same TRP. To prevent this, a part of the bits of the SA may include bits indicating a TRP. Also, a specific TRP may be indicated by combining an ID bit field and bits of a TRP field in the SA. For example, the ID included in the SA may be used to indicate a TRP set and TRP indication bits included in the SA may indicate a specific index within the TRP set. In another example, the TRP bits included in the SA may indicate a specific TRP set within a resource pool and the ID included in the SA may indicate a specific TRP within the pool/set indicated by the TRP bits. In this case, the bits indicating a TRP set may be transmitted semi-statically without being transmitted in every SA. For example, the bits indicating a TRP set may be used as a virtual CRC on the assumption that the bits are transmitted in every $n^{th}$ SA or even though the bits are transmitted in every SA, they are not changed over n SA transmissions. Meanwhile, these TRP bits are not included additionally. Rather, the TRP bits may be transmitted by borrowing an unused state of MCS bits or any other SA bit field. Or a TRP pattern may be indicated by using all unused states of additionally included bits and other bit fields.

Meanwhile, the size of TRP bits used in an indication of an SA may be changed according to the size of a D2D UE group or the number of Tx UEs in the group. For example, if a specific police officer group includes N police officers, the number of TRP indication bits is set to log2(N). Herein, the remaining unused bits may be used for other purposes or may be set to 0s for use as a virtual CRC.

Meanwhile, an ID may be set differently for a TRP in mode 1 and mode 2. For example, while a TRP may be indicated using only a Tx UE ID in mode 1, a TRP may be indicated using both a Tx UE ID and a target UE ID (group ID) in mode 2.

To configure a TRP, the following information may be used: i) information about the size of a transmission opportunity from the viewpoint of a UE (this information indicates how many resources are allocated to one UE by one SA); and ii) information about the number of retransmissions for each TB (this information may be information about the number of TBs transmitted during one SA period. In this case, the number of retransmissions for each TB may be calculated by flooring the size (number) of transmission opportunities during one SA period/the number of TBs transmitted by one SA. Or this information may be information about the (maximum) number of repetitions for each TB). Part of the information may be preset or configured by the network. The information may be preset for an out-of-coverage UE or signaled to the out-of-coverage UE from another UE within the network by a physical-layer signal or a higher-layer signal. In addition, part of the information may be included and transmitted in an SA. For example, the transmission opportunity size may be preset or configured by the network. Herein, a retransmission number for each TB may be included and transmitted in the SA. On the other hand, information about the transmission opportunity size may be included and transmitted in the SA and information about the retransmission number may be preset or semi-statically indicated in a higher-layer signal by the network.

In a specific example, if an SA includes an 8-bit ID, the number of TRPs distinguishable by IDs is 256 (=2^8). If a mode-2 resource pool includes 16 subframes and a transmission opportunity size is 8, the number of TRPs that can be generated is 12870 (=16C8). Therefore, it is impossible to identify a TRP only by the ID bits included in the SA. To avoid this problem, additional bits may be included in the SA in order to indicate a TRP in the above-described method. In this case, about 6 additional bits are needed to distinguish all TRPs that can be produced. The additional bits may be available from a combination of unused MCS states and a new bit field or from an additional bit field.

Signaling of TRP Subset

The network may signal a TRP subset configuration by a higher-layer signal (e.g., an RRC signal). More specifically, a UE may determine a bitmap for application to a subframe pool for data transmission using TRP indication information and transmit D2D data in subframes indicated by the bitmap, as described before. In the case where an RRC Information Element (IE) related to a TRP subset is configured for the UE, if the UE is not related to the RRC IE related to a TRP subset, a set of bitmaps that can be indicated by the TRP indication information may be a subset of a bitmap set that can be indicated by the TRP indication information. Herein, the TRP indication information is an index indicating one bit map in a bitmap set.

The above description will be detailed with reference to [Table 1] below. [Table 1] defines a relationship between TRP indication information $I_{TRP}$ and a bitmap corresponding to the TRP indication information $I_{TRP}$, under the condition that the size of a TRP-related subframe indicator bitmap is 6. For example, if the TRP indication information $I_{TRP}$ is 22, the subframe indicator bitmap is {0, 1, 1, 0, 1, 0}.

[Table 1]

| $I_{TRP}$ | $k_{TRP}$ | $(b'_0, b'_1, ... b'_{N_{TRP}-1})$ | $I_{TRP}$ | $k_{TRP}$ | $(b'_0, b'_1, ... b'_{N_{TRP}-1})$ | $I_{TRP}$ | $k_{TRP}$ | $(b'_0, b'_1, ... b'_{N_{TRP}-1})$ |
|---|---|---|---|---|---|---|---|---|
| 0 | reserved | reserved | 22 | 3 | (0,1,1,0,1,0) | 44 | 3 | (0,0,1,1,0,1) |
| 1 | 1 | (1,0,0,0,0,0) | 23 | 4 | (1,1,1,0,1,0) | 45 | 4 | (1,0,1,1,0,1) |
| 2 | 1 | (0,1,0,0,0,0) | 24 | 2 | (0,0,0,1,1,0) | 46 | 4 | (0,1,1,1,0,1) |

(continued)

| $I_{TRP}$ | $k_{TRP}$ | $(b'_0, b'_1, ... b'_{N_{TRP}-1})$ | $I_{TRP}$ | $k_{TRP}$ | $(b'_0, b'_1, ... b'_{N_{TRP}-1})$ | $I_{TRP}$ | $k_{TRP}$ | $(b'_0, b'_1, ... b'_{N_{TRP}-1})$ |
|---|---|---|---|---|---|---|---|---|
| 3 | 2 | (1,1,0,0,0,0) | 25 | 3 | (1,0,0,1,1,0) | 47 | 5 | (1,1,1,1,0,1) |
| 4 | 1 | (0,0,1,0,0,0) | 26 | 3 | (0,1,0,1,1,0) | 48 | 2 | (0,0,0,0,1,1) |
| 5 | 2 | (1,0,1,0,0,0) | 27 | 4 | (1,1,0,1,1,0) | 49 | 3 | (1,0,0,0,1,1) |
| 6 | 2 | (0,1,1,0,0,0) | 28 | 3 | (0,0,1,1,1,0) | 50 | 3 | (0,1,0,0,1,1) |
| 7 | 3 | (1,1,1,0,0,0) | 29 | 4 | (1,0,1,1,1,0) | 51 | 4 | (1,1,0,0,1,1) |
| 8 | 1 | (0,0,0,1,0,0) | 30 | 4 | (0,1,1,1,1,0) | 52 | 3 | (0,0,1,0,1,1) |
| 9 | 2 | (1,0,0,1,0,0) | 31 | 5 | (1,1,1,1,1,0) | 53 | 4 | (1,0,1,0,1,1) |
| 10 | 2 | (0,1,0,1,0,0) | 32 | 1 | (0,0,0,0,0,1) | 54 | 4 | (0,1,1,0,1,1) |
| 11 | 3 | (1,1,0,1,0,0) | 33 | 2 | (1,0,0,0,0,1) | 55 | 5 | (1,1,1,0,1,1) |
| 12 | 2 | (0,0,1,1,0,0) | 34 | 2 | (0,1,0,0,0,1) | 56 | 3 | (0,0,0,1,1,1) |
| 13 | 3 | (1,0,1,1,0,0) | 35 | 3 | (1,1,0,0,0,1) | 57 | 4 | (1,0,0,1,1,1) |
| 14 | 3 | (0,1,1,1,0,0) | 36 | 2 | (0,0,1,0,0,1) | 58 | 4 | (0,1,0,1,1,1) |
| 15 | 4 | (1,1,1,1,0,0) | 37 | 3 | (1,0,1,0,0,1) | 59 | 5 | (1,1,0,1,1,1) |
| 16 | 1 | (0,0,0,0,1,0) | 38 | 3 | (0,1,1,0,0,1) | 60 | 4 | (0,0,1,1,1,1) |
| 17 | 2 | (1,0,0,0,1,0) | 39 | 4 | (1,1,1,0,0,1) | 61 | 5 | (1,0,1,1,1,1) |
| 18 | 2 | (0,1,0,0,1,0) | 40 | 2 | (0,0,0,1,0,1) | 62 | 5 | (0,1,1,1,1,1) |
| 19 | 3 | (1,1,0,0,1,0) | 41 | 3 | (1,0,0,1,0,1) | 63 | 6 | (1,1,1,1,1,1) |
| 20 | 2 | (0,0,1,0,1,0) | 42 | 3 | (0,1,0,1,0,1) | 64-127 | reserved | reserved |
| 21 | 3 | (1,0,1,0,1,0) | 43 | 4 | (1,1,0,1,0,1) | | | |

The above [Table 1] may be referred to as a mother bitmap set that is available, if there is no specific RRC signaling. In this case, an RRC IE related to a TRP subset may be configured for a UE. The RRC IE related to a TRP subset may impose a restriction on an index-based available set. For example, if $k_{TRP}$ available to the UE is 4 at maximum in [Table 1] and the TRP subset-related RRC IE is {1, 1, 1, 0}, a set of bitmaps corresponding to $k_{TRP}$ values of 1, 2, and 3 may be a subset of the mother bitmap set. That is, in the case where a TRP subset-related IE is configured by RRC signaling, if the UE is not related to the TRP set-related RRC IE (if the RRC IE is not signaled or if the RRC IE is signaled but not configured), a set of bitmaps available to the UE or a set of TRP indication information may be a subset of a set of bitmaps or TRP indication information.

The TRP subset-related RRC IE may be for a mode-2 UE.

Restricting a TRP subset by the network may be effective especially when a UE determines transmission resources as in mode 2. In the case where the UE selects a TRP index randomly, if there are a small number of neighbor UEs and thus interference is not severe, the UE may transmit a packet faster by selecting a large $k_{TRP}$ value. On the other hand, if there are a large number of neighbor UEs and thus interference is severe, the UE may be limited to a relatively small $k_{TRP}$ value through a subset to solve inband emission and half duplexing. Consequently, the specific UE may be prevented from causing severe interference continuously.

Meanwhile, although a TRP subset may be restricted by restricting $k_{TRP}$ values, it may be restricted by restricting specific TRP indexes. For example, use of a specific $I_{TRP}$ set may be signaled to a specific UE or UE group. Despite a requirement for more signaling bits than in the case of restricting a subset by signaling a $k_{TRP}$ value, this method enables more flexible TRP subset restriction. Also, this method may be used to make a UE or UE group different from a specific UE or UE group use a different subframe in the time domain. For example, a TRP subset may be configured for UE group A so that UE group A may perform transmission in all or a part of the first 4 subframes of a TRP bitmap, whereas a TRP subset may be configured for UE group B so that UE group B may perform transmission in all or a part of the last 4 subframes of the TRP bitmap.

**Discovery signal and TRP**

A TRP generation method including the aforementioned contents related to the TRP (including the contents related to TRP generation described on application number PCT/KR2015/004319, paragraphs [86] ~ [245]) can also be applied to a case that a discovery signal is transmitted under the direction of an eNB. Type 1 discovery corresponds to a scheme that an eNB or a specific scheduling node (if a UE has a corresponding function, the UE may correspond to a scheduling node) configures a resource pool and a discovery signal transmission UE selects one or more resources from the configured resource pool and transmits a discovery signal. On the other hand, according to type 2 discovery, an eNB or a specific scheduling node (if a UE has a corresponding function, the UE may correspond to a scheduling node) indicates a discovery transmission resource for a specific UE. In this case, it may individually indicate a discovery transmission resource in every discovery transmission or indicate a plurality of discovery signal transmission resources at one indication. If an eNB or a scheduling node individually indicates a discovery signal transmission resource, it can be called as a type 2a. If the eNB or the scheduling node indicates a plurality of discovery signal transmission resources, it can be called as a type 2B. In case of the type 2, when the same eNB schedules UEs different from each other, since the eNB is able to configure the UEs to use a different resource, resource collision does not occur between the UEs. On the contrary, in case of the type 1, since a resource is selected by UEs, UEs different from each other may select the same resource and resource collision may occur. In case of the type 2B, it may be preferable to configure an eNB to transmit a discovery signal from a different position between UEs. This is because, if a plurality of discovery signal transmission UEs transmit a discovery signal at the same time, a plurality of the discovery signal transmission UEs are unable to receive (listen) a signal at the same time. As a result, the UEs are unable to discover the UEs with each other. This problem can be referred to as a half-duplex constraint. In order to solve the half-duplex constraint, it is preferable that the eNB or the scheduling node performs transmission at different timing as far as possible.

If a resource pool for the type 2B is determined in advance and transmission timing is indicated by an eNB in each pool, it becomes a problem similar to signaling a TRP in D2D communication.

Assume that a resource pool for the type B is configured by N number of subframes and each UE transmits a discovery signal in M number of subframes during the N number of subframes. In this case, an eNB (hereinafter, all scheduling nodes are called as an eNB) can indicate a TRP of a length N to each discovery signal transmission UE. In this case, the TRP can be indicated by one of the aforementioned methods. In this case, a discovery resource pool (period) can be periodically configured and the resource pool can be signaled via SIB. In this case, the resource pool of the type 2B can be included in a resource pool of the type 1 or a separate resource pool can be configured.

When a type 2 discovery resource is configured by T number of subframes and a UE performs transmission M times in the resource, the eNB can indicate a TRP that weight corresponds to M and a length corresponds to T. A scheme of indicating a plurality of discovery signal transmissions indicated by the eNB is referred to as type 2B discovery. In this case, the T number of subframes can be generated in a manner of gathering a plurality of discovery periods or can be configured in a single discovery period. As one of the TRP generation methods, the eNB can signal a TRP index to a type 2B discovery signal transmission UE via a physical layer signal (or a higher layer signal). In this case, the TRP index can be hopped using a specific rule in every period or column permutation can be performed. In this case, a permutation rule can be interlocked by a specific ID or a combination of specific ID among a physical cell ID, a virtual cell ID, a synchronization source ID, D2D-RNTI, and a Tx UE ID. When a TRP set is generated, a scheme of generating the set can be interlocked by a specific ID or a combination of specific ID among a physical cell ID, a virtual cell ID, a synchronization source ID, D2D-RNTI, and a Tx UE ID. The eNB can signal a specific TRP set and a TRP to be used among the TRP set. As mentioned above, since the TRP set is able to be interlocked with a specific ID (e.g., cell ID), it may be not necessary to have ID signaling or separate explicit signaling for designating a TRP set. Or, in order to directly indicate a specific TRP set, a specific ID can be signaled.

Meanwhile, the aforementioned cell-specific TRP generation scheme can be comprehended as a hopping pattern is different according to a cell. In this case, if a TRP is interlocked with a cell ID, it can be comprehended as a hopping pattern is different according to a cell. According to the method 8 among the contents of TRP generation described in the paragraphs [86] ~ [245] of application number PCT/KR2015/004319, a position of a following resource is determined based on a first resource position. If an eNB indicates the first resource position, it may be able to determine a hopping pattern.

**Priority and D2D signal transmission**

In the following, a scheme of transmitting a signal transmitted by assigning priority to a specific UE or a UE group in D2D communication is explained. In this case, the priority is assigned to make a signal of the specific UE or the UE group to be received well compared to a signal of low priority. When a UE or a UE group of higher priority intends to transmit a signal, the priority is assigned to make a UE or a UE group of lower priority stop transmission and perform reception. By doing so, a signal of high priority may not be interfered by the UE or the UE group of lower priority. The scope of the present invention is not restricted by the definition of the priority. It is apparent that the present invention is applicable to various types of priority definition. As an example, the priority is assigned to make a signal to be robust from interference or noise by coding the signal using a low coded rate using many radio resources.

Meanwhile, although priority is assigned according to a UE or a UE group, it may differently assign priority according to a type of a message transmitted by the UE or the UE group. For example, while a specific UE normally transmits a signal of low priority, the specific UE may transmit a message of high priority in a specific situation.

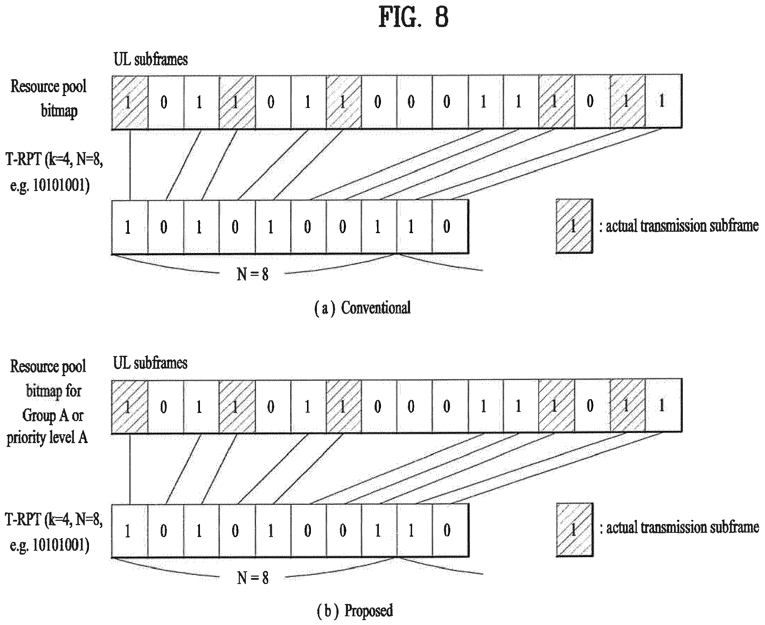

When a D2D UE transmits a signal, the D2D UE can determine a resource pool from among resource pools classified according to priority. In particular, when there exist a plurality of resource pools, priority can be assigned to each of a plurality of the resource pools. In this case, a resource pool and priority may have one-to-one relation (1:1) or one-to-many (1:N) relation. In other word, a plurality of priorities can be assigned to a resource pool in a manner of being interlocked. As an example, if 4 resource pools are configured and a message priority is configured by 8 steps, two or more priorities can be assigned to a resource pool. In order to transmit a D2D packet, the D2D UE determines a resource for transmitting the D2D packet by applying priority of the D2D packet to a resource pool which is determined via the priority. In this case, when the resource for transmitting the D2D packet is determined, it may apply a TRP (a TRP indicated by PSCCH format 0 and a position of a frequency resource). In particular, when the resource for transmitting the D2D packet is determined by applying a TRP to a resource pool, the priority of the D2D packet is applied. To this end, TRP subsets can be divided according to the priority of the D2D packet. For example, when a TRP is determined as Table 1, the TRP can be divided into a plurality of subsets according to priority. The subset configuration can be determined in advance or can be signaled to a UE via physical layer signaling or higher layer signaling. FIG. 8 shows an example for a method of determining a subframe in which a D2D packet is transmitted by applying a priority-related TRP to a resource pool. FIG. 8(a) and FIG. 8 (b) show a TRP for a specific UE and a TRP for a specific group or a specific priority level, respectively.

In particular, according to the embodiment of the present invention, a D2D signal can be transmitted by selecting a resource pool according to priority. Or, in order to transmit a D2D signal, a TRP is applied according to priority in a resource pool and the D2D signal is transmitted in a resource to which the TRP is applied. Moreover, if a resource pool is selected according to priority and a TRP according to priority is applied in the resource pool which is selected according to priority, it may be able to determine a resource for transmitting a D2D signal. In particular, priority can be duplicately applied. In this case, the priority for selecting the resource pool and the priority for determining the TRP (subset) can be identical to each other or can be different from each other.

In the following, various embodiments for each case are explained. In particular, embodiments for a relation between priority and a resource pool, embodiments for a relation between priority and a TRP, embodiments for a relation between priority and a group, and embodiments for a channel are explained.

**Priority and resource pool**

As mentioned in the foregoing description, there may exist a plurality of resource pools and priority can be assigned to each of a plurality of the resource pools. A UE can select and transmit a pool maximizing a metric of which priority is high according to priority determined in advance or priority indicated by higher layer signaling or physical layer signaling. In this case, order of the priority can be determined in advance according to all or a part of a service type, RSRP, Tx power, range, delay, and a priority level of pool itself.

For example, assume that priority is determined in an order of a service type, Tx power (or range, power consumption), and delay and N number of pools are configured. If there are N1 number of pools satisfying the aforementioned 3 conditions and there are N2 number of pools satisfying the service type, a pool using least power (If priority metric is to minimize power consumption, a pool of weak transmit power is selected. If a wider range is prioritized, a pool of strong transmit power is selected) is selected and transmitted. As a different example, when there are a plurality of pools satisfying the conditions, if delay is configured as top priority, a pool of a shortest period can be selected and transmitted. As a further different example, when there are a plurality of pools satisfying the conditions, if an interference level is configured as top priority, a pool of a lowest interference level can be selected and transmitted. As a different embodiment, if there are a plurality of transmittable pools, a pool used as a D2D Pcell can be transmitted with top priority. If a plurality of the transmittable pools satisfy all other conditions, a pool can be selected from among a plurality of the transmittable pools according to priority set to the pools in advance.

**Priority and TRP**

A TRP subset used by a specific UE or a UE group can be restricted by a specific set in advance. For example, as priority of a D2D packet is higher, a TRP including more 1's can be used. In particular, it may be able to configure a UE of a higher priority level to use a TRP of a higher transmission count (a value including more 1's (K) in a TRP bitmap). Although it is able to directly set a limit on a TRP subset used by a specific UE or a specific UE group (TRP subset index capable of being used by a network is directly signaled to the specific UE or the specific UE group), it may signal an available K value to the specific UE or the specific UE group to reduce the signaling amount. For example, a UE of a higher priority level uses a TRP of which the K value is big and a UE of a lower priority level uses a TRP of which the K value is small. In this case, since a D2D signal of the UE of the higher priority is transmitted for longer time compared to a different D2D signal, a probability of receiving the D2D signal can be increased compared to a D2D signal of lower priority (TRP of which K value is small). If a network UE-commonly signals the TRP restriction, a UE-specific or UE group-specific signal can be separately signaled by the network according to the priority of the UE or the UE group.

As mentioned in the foregoing description, when a TRP including many 1s is used, it may be able to configure the number of repetitive transmissions per MAC PDU (medium access layer protocol data unit) to be increased as well. If a K value is simply configured to be big, although the number of transmission increases, since the number of transmission of MAC PDU is fixed, it may have a result of simply transmitting a D2D packet faster. In this case, a D2D signal of a corresponding UE can be transmitted with a higher transmission rate. Yet, the operation is different from an operation of forwarding a signal with higher probability. Hence, when a higher K value is used according to priority, if the K value increases, it may be able to configure the number of repetitive transmission per MAC PDU to be increased as well. To this end, a network can signal the K value together with the number of repetitive transmission per MAC PDU. Or, the number of repetitive transmission per MAC PDU according to the K value can be determined in advance. In order to make a reception UE know that the number of retransmission per MAC PDU has changed, information on the number of retransmission per MAC PDU can be included in a partial region of SA (PSCCH) or a D2D communication packet. Or, it may be able to indicate the number of transmission per MAC PDU using a separate SA format.

Or, there may exist a K value set determined in advance according to a priority level and/or the number of retransmission per MAC PDU (interlocked with the K value or irrespective of the K value). Hence, a UE can transmit a D2D packet by selecting the K value and the number of retransmission according to the priority level.

Having more resources in time domain according to priority can be extended to frequency domain. As an example, a size of a frequency resource capable of being selected from a resource pool can be configured according to priority, or a frequency resource region capable of being selected can be divided according to priority. The division of the frequency resource region according to priority can be determined in a manner of being interlocked with a TRP. In particular, it may be able to allocate more time resources and more frequency resources to a group of higher priority.

The priority can be configured according to a group. A resource pool bitmap and/or a frequency resource configuration can be signaled via physical layer signaling or higher layer signaling according to a group. In case of out of coverage, a resource pool bitmap can be determined in advance according to a group. If there is a limit on the number of resource pools, it may signal a priority indicator according to each resource pool or may indicate a pool capable of being used according to a priority level in accordance with each D2D UE group using priority determined in advance. As an example, it may be able to restrict the maximum number of resource pools by N and a priority level can be determined in advance according to each pool. When it is necessary to transmit an emergency message due to such a disaster as tsunami, earthquake, or volcano, or when a UE performs relaying due to a damaged network, a signal is transmitted from a pool of highest priority. A public safety UE group such as a police officer or a firefighter has second highest priority and D2D signal transmission for commercial use may have a lowest priority. In this case, each UE can transmit a D2D signal from a pool of an appropriate priority level. In this case, signal transmission of a UE or a UE group having higher priority may be permitted in a pool of low priority. In particular, a pool of higher priority prohibits other UEs from transmitting a signal to prevent a collision. By doing so, it may be able to make a signal to be more smoothly received. On the contrary, since many UEs transmit and receive signals in a pool of lower priority, an interference level is high in the pool. As a result, it may be difficult to smoothly receive a signal in the pool of lower priority compared to the pool of higher priority.

## Method of selecting other resource pool

One resource pool can be divided into a plurality of logical channels and each UE group can use a different logical channel. In this case, the logical channel can be assigned by a network via physical layer signaling or higher layer signaling. Specifically, the network can signal a bitmap and/or frequency resource information to a specific UE or a specific UE group to set a limit on a subframe and/or a frequency resource region again capable of being used in a resource pool. The logical channel may have a form differentiated in the time domain. This is intended to mitigate half-duplex constraint by differentiating a UE having a different priority in the time domain. In particular, a signal of a UE or a UE group having higher priority can be more smoothly received in the time domain in a manner of being differentiated from signals of other UEs. As an example of the differentiating method in the time domain, when a specific resource pool is configured, it may be able to configure a bit value 1 not to be set to the same position in a resource pool bitmap used by a specific UE or UE group and a resource pool bitmap used by a different UE or UE group.

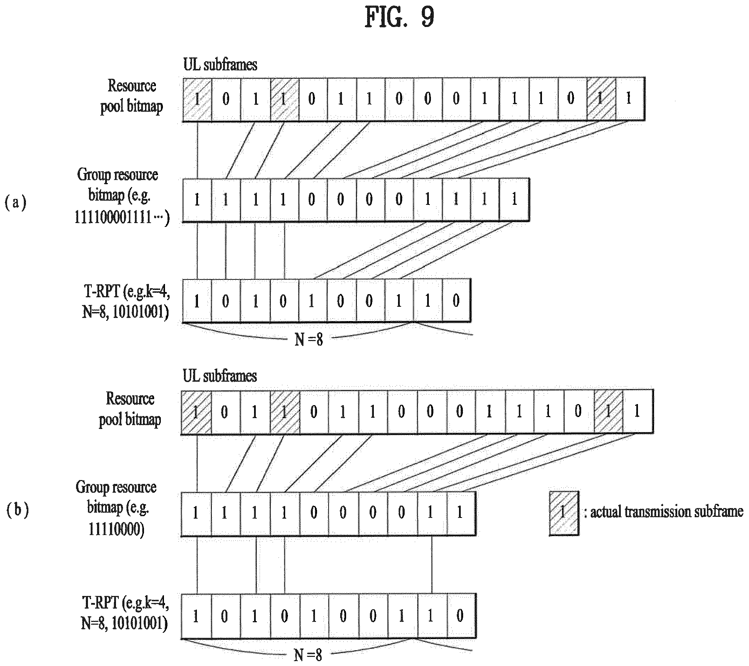

According to a current mode 2 communication, a D2D transmission resource is configured by a D2D resource pool consisting of UL subframes via a resource pool map and the D2D resource pool indicates a position of a subframe in which a TRP bitmap indicating a transmission resource is transmitted. An example of configuring a separate logical channel according to a specific UE or UE group in time domain is shown in FIG. 9 (a). One step before the TRP bitmap is applied in the resource pool bitmap, a bitmap of a resource used by a specific UE group is firstly applied to the resource pool bitmap and the TRP bitmap is sequentially configured at a position where a group bitmap corresponds to 1. In this case, a TRP can be sequentially applied only in a subframe position at which both a bit value of the resource pool bitmap and a bit value of a logical channel bitmap correspond to 1.

FIG. 9 (b) shows a method of configuring a separate logical channel according to a specific UE or UE group in time domain. While a practically using group bitmap is applied in a resource pool bitmap, a TRP can be applied at a position of 1 in the resource pool bitmap. In particular, the group bitmap is used for the usage of restricting a partial region of a resource pool and transmission is not performed at a corresponding position. In this case, a UE belonging to a group recognizes that a partial region of a TRP is unusable and may exclude a TRP including 1 in the region from TRP selection.

In order to perform the aforementioned two methods, it is necessary for a reception UE to know a group bitmap of a transmission UE. The group bitmap can be transmitted in a manner of being included in SA or a specific D2D packet within an SA period. Or, a network can signal a bitmap according to a group to Rx UEs.

Meanwhile, although a network is able to indicate a bitmap according to a group, if there is a group ID according to a group and the group ID is interlocked with a logical channel ID, it may be able to determine a logical channel in a pool using the group ID without separate signaling.

Meanwhile, if a destination group transmitted to the same UE varies, priority may vary. Hence, although the aforementioned proposed scheme corresponds to priority for a group to which a UE belongs thereto, priority can also be determined according to a destination to be transmitted by a UE. In this case, it may follow the priority of the group to which the UE belongs or priority of a currently transmitted destination group.

Meanwhile, it may also consider priority when SA is transmitted. For example, when SA is transmitted, it may apply offset to transmit power according to priority. Or, it may configure repetition to the SA. For example, it may separately configure an SA resource pool transmitted by a UE of higher priority and the number of repetition is configured by 2 or higher in the pool to consider a half-duplex hopping scheme. By doing so, transmission is performed 4 times. Or, if SA is transmitted in a legacy SA pool and a network configures a pool in which a UE of higher priority additionally transmits SA, the UE of higher priority can additionally transmit SA in the pool. In this case, the pool in which the SA is additionally transmitted and the SA pool in which the original SA is transmitted are interlocked with the same data pool. In order to indicate this, it may be able to signal a data pool interlocked with the additionally transmitted SA pool or SA pool transmitted by UEs of higher priority.

As a different embodiment, it may be able to configure a UE of higher priority to transmit a D2D signal with higher transmit power. To this end, a network can configure a separate power control parameter (P0, alpha) to the UE or UE group. Or, the network can configure a UE-specific power control parameter offset (IE-specific P0 offset and/or UE-specific alpha offset). As an example, it may configure a UE-specific P0 offset value to a UE operating as a relay to make the UE transmit a signal with power higher than power of other D2D UEs.

As a further different example, when a plurality of pools are configured, it may select and transmit a pool according to a service type. For example, when 4 pools are configured, if 2 pools are configured for PS (public safety) use and NPS (non-public safety) use, respectively, one pool is selected from the PS pools and the NPS pools, respectively. If a UE does not have any information to be transmitted in the middle of a specific service among the PS and the NPS, the UE does not transmit data to a pool of the service.

If a plurality of pools satisfy attributes (Tx power, RSRP level, service type, D2D pool priority level, range, etc.) set to the pools, transmission can be performed in all of a plurality of the pools satisfying the attributes set to the pools.

Meanwhile, a main purpose of differentiating a D2D resource pool by RSRP or transmit power is to protect a UE of weak Tx power from IBE of a UE of strong Tx power. Hence, it is preferable to set a limit on transmission of the UE of strong Tx power in a pool of low Tx power. Yet, in some cases, the UE of weak Tx power may use a pool used by the UE of strong Tx power to perform D2D transmission and reception. This may correspond to a case that a D2D UE is located at a very close location. In this case, the UE of weak Tx power can use a pool at which UEs of strong Tx power are located. To this end, a maximum power value capable of being transmitted by a UE can be set to each pool. For example, maximum Tx power can be determined in advance in a manner that 5 dBm, 10 dBm, and 23 dBm are set to a pool A, a pool B, and a pool C, respectively. Or, a maximum Tx power value according to a pool can be signaled to a UE via physical layer signaling or higher layer signaling. OLPC (open loop power control) corresponds to a scheme of measuring a PL (path loss) from a reference signal of an eNB and determining transmit power of a D2D signal using the measured PL. In this case, an OLCP parameter according to a D2D signal can be signaled by a network in advance via physical layer signaling or higher layer signaling. If the OLCP is applied, a UE configures transmit power of the UE. For example, if the UE configures 8 dBm as the transmit power of the UE, the UE can perform transmission in the pool B and the pool C. According to the present method, it may be able to reduce signaling overhead compared to a method of configuring RSRP or Tx power range according to a pool and increase the degree of freedom of a D2D UE in selecting a pool.

In the following, a pool according to a range class of a D2D UE and a power configuration operation are explained. According to a legacy LTE system, PUSCH transmit power is determined by $P_{\text{PUSCH,c}}(i) = \min\{P_{\text{CMAX,c}}(i), P_{\text{O\_PUSCH,c}}(1) + \alpha_c(1) \cdot PL_c + f_c(i)\}$. In this case, $P_{\text{CMAX,C}}$ corresponds to configured UE transmit power of a serving cell c (in the following, meaning of a subscript c is all the same and c can be omitted for clarity) and the $P_{\text{CMAX,C}}$ may have a different value according to a frequency band and may have a different value according to a UE power class. $P_{\text{O\_PUSCH,c}}(1)$ corresponds to nominal power and has a UE-specific part and a cell-specific part. In D2D, a value for the $P_{\text{O\_PUSCH,c}}(1)$ can be separately signaled according to a resource pool. $\alpha_c(1)$ corresponds to a pathloss compensation factor. In D2D, a value of the $\alpha_c(1)$ can be separately signaled according to a resource pool. $f_c(i)$ corresponds to a value determined by a TPC command and the $f_c(i)$ is used in a communication mode 1 only. An eNB can signal the $f_c(i)$ via a D2D grant DCI in the Mode 1. For clarity, the $P_{\text{O\_PUSCH,c}}(1)$, which is signaled according to a resource pool, and the $\alpha_c(1)$ are represented by P0 and alpha, respectively.

As a first method for configuring a pool and power according to a range class of a D2D UE, a network can set a range class to a UE in D2D signal transmission. Or, a specific D2D UE can be configured by a specific range class in advance. Or, it may be able to determine a range class associated with importance of D2D data to be transmitted by a UE or the D2D data. For example, when a UE receives ProSe Application Code(PAC) from ProSe Function(ProSe management network node), it may be able to set a range class necessary for the UE to apply to transmit the PAC. It may assume a range class of three stages including short, medium, and long. A network can determine P0 and alpha values corresponding to each range class. When the network signals resource pool information to a UE, P0 and alpha values corresponding to a range class of each pool can be included in the resource pool information. Hence, when a plurality of resource pools are configured in a specific cell, each of a plurality of the resource pools can be used for differentiating a range class. Meanwhile, when maximum transmit power Pcmax is applied, it may be able to apply a different value according to a range class. If a different Pcmax is configured according to a resource pool, a different pool can be applied to a different range class. In particular, according to the present method, a UE can determine transmit power using Pcmax, P0, and alpha values configured in a corresponding pool.

As a second method, Pcmax may correspond to a value individually set to a specific UE or UE group. The Pcmax value can be signaled by a network via higher layer signaling or physical layer signaling. According to the second method, since P0 and alpha values are configured according to a pool, a UE using the pool can commonly use the values. However, the Pcmax value can be differently set to each UE. The Pcmax can be configured by a specific value according to a range class predetermined by a UE. Or, when a network configures a range class of a specific UE, the Pcmax can be determined in a manner of being signaled by the network.

As a third method, Pcmax can be configured by the sum of a cell-specific part and a UE-specific part and the cell-specific part can be differently configured according to each pool. As mentioned in the foregoing description, the UE-specific part can be differently configured according to a range class of a UE. The UE-specific part can be determined by signaling of a network or can be set to a UE of a specific type in advance. In this case, each of parameters constructing the Pcmax can be signaled to a UE via physical layer signaling or higher layer signaling. The first method may correspond to an embodiment of configuring the Pcmax by cell-specific parameters only and the second method may correspond to an embodiment of configuring the Pcmax by UE-specific part only.

In general, a higher range class uses higher power (e.g., P0 value is greater). Hence, as mentioned in the foregoing description, when a UE of lower Tx power uses a pool used by a UE of higher Tx power, it can be comprehended as a UE uses a range class higher than a range class of the UE in some cases by connecting to a discovery range class transmitted by each UE. Specifically, if there is a pool satisfying a range class of a UE, the UE uses the pool. On the contrary, if there is no pool satisfying a range class of a UE, the UE may use a pool of a range class higher than a range class set to the UE. This may indicate that it is necessary for a range class to achieve a minimum range. If a range class of a specific UE does not exist in a resource pool configuration, it may achieve the range class preferred by the UE using a pool configured by a wider range class. In this case, P0 and alpha use a value set to the pool and the Pcmax can be configured using one of the first to the third methods for configuring a pool according to a range class of a D2D UE and power. In particular, in case of using the first method, although UEs of a different range class coexist in the same pool and commonly use P0 and alpha values assigned to the pool, since Pcmax is applied according to a range class, consequently, the UEs can use different maximum transmit power in the same pool.

Meanwhile, when a plurality of pools are assigned and a network sets a transmission condition to each of a plurality of the pools, if there is no pool satisfying a transmission condition of a UE, the UE is unable to transmit a D2D signal. In this case, it may assign such a condition as the UE assumes that the network does not configure a parameter corresponding to the transmission condition of the UE. For example, when pools are divided according to RSRP, a UE assumes that the UE is able to select at least one pool because there is no discontinuous region of RSRP between pools. To this end, when the network configures parameters according to a pool, it is necessary to configure the parameter not to have a discontinuous region.

If the aforementioned condition does not exist, it may be able to configure an individual parameter according to a pool. In some cases, a UE may not have a pool to transmit. This may correspond to a method for a network to intentionally set a limit on D2D signal transmission. Yet, in some cases, a case of mandatorily transmitting a D2D signal may occur. For example, if interference amount heading to an eNB temporarily and excessively increases, a network may configure an RSRP parameter according to a pool to make UEs equal to or less than a specific RSRP not to transmit a D2D signal to control the number of UEs transmitting a D2D signal. In this case, if an emergency PS signal occurs in a corresponding region, a D2D signal can be inevitably transmitted. In particular, although the network configures a parameter in a manner that there is no pool to be transmitted to a specific D2D UE, transmission of a predetermined specific D2D signal (e.g., a PS signal or a signal related to survival of a person) can be permitted.

A different embodiment for a case that there is no pool to be transmitted by a UE is explained. When a network configures a parameter based on information reported by a UE, if the reported information is incorrect, the network may configure a parameter in a manner that there is no pool to be transmitted by a specific UE. Yet, if the UE moves to a different location or a channel state of the UE is changed, transmission of the UE can be enabled. In this case, compensation for transmit power or transmission count can be performed on an event not transmitted in the past. For example, if a UE is located at a location very close to an eNB, the UE has no transmittable pool. Thereafter, if the UE is away from the eNB and has a transmittable pool, the UE can perform transmission in the pool with more transmission count, higher power, and higher probability. In this case, compensation information on the count, the power, and the probability can be configured in proportion to count and time not transmitted in the past. In this case, an upper limit for the compensation can be determined in advance. For example, if transmission is not performed for 10 periods in the past, it may determine a rule that the transmission is compensated by a probability as much as 0.2. In this case, a maximum transmission probability can be configured not to exceed X. The upper limit is configured to prevent a different D2D signal or eNB reception performance from being interfered by excessive compensation.

Meanwhile, a condition for RSRP or Tx power is a recommendation of an eNB only. If there is no pool satisfying a condition, it may determine rule that a UE selects and transmits a pool closest to the condition. For example, D2D OLCP is applied to reduce interference from an eNB to equal to or less than a prescribed level. In this case, if there is no pool corresponding to a transmittable Tx power range, a UE can select and transmit a pool of which a Tx power value is lowest. This part can be interlocked with a discovery range class as follows. If a UE has a pool satisfying a range class of the UE, the UE can use the pool. If there is no pool satisfying the range class of the UE, the UE may use a pool of a range class lower than the range class set to the UE.

### Type of resource pool

In the foregoing description, if there are pluralities of resource pools, a plurality of the resource pools can be classified as follows.

The resource pools can be classified by PS/NPS. It may be able to determine whether a D2D signal resource pool is used for PS or NPS in advance.

The resource pools can be classified by transmit power or RSRP threshold. If OLCP is applied to D2D signal transmission, transmit power of a UE transmitting a D2D signal may have a considerable difference. For example, if a D2D UE is located at a cell center, since PL is small, transmit power is configured to be low. If a D2D UE is located at a cell edge, since PL is big, transmit power can be configured to be high. In this case, since a D2D signal transmitted by the high transmit power UE generates big IBE (in-band emission), although a low transmit power UE uses a different frequency resource, SINR can be considerably deteriorated due to the big IBE. Hence, in this case, it is necessary to separate transmission resource regions according to RSRP of a UE to reduce the performance deterioration due to the IBE. When the resource regions are separated according to the RSRP, the resource regions can also be separated according to transmit power. When UEs including different maximum transmit power coexist, although PL is big, it may perform transmission with low power. In this case, a UE of low transmit power may experience a severe IBE from a UE of high transmit power. In this case, it may be preferable to classify the resource regions according to transmit power rather than the RSRP.

Resource pools can be classified according to signal coverage (or signal coverage range). A specific resource region may correspond to a resource which is allocated to secure a wider range. In this case, a range can be implemented by differentiating transmit power of UEs or adjusting the entire interference level by controlling the number of UEs performing transmission in the resource region. In the former case, the resource pools can be classified by the aforementioned transmission resource threshold according to a D2D resource pool. In the latter case, it may set a limit on the number transmission UEs according to a resource pool or set a transmission probability in a corresponding resource pool.

Resource pools can be classified by a D2D primary (P-pool) or a secondary pool (S-pool). When a plurality of D2D resource pools are configured, it is necessary to perform efficient interference control on the P-pool to reduce a packet error compared to other pools. A relatively less limitative transmission scheme (e.g., random transmission) can be used for the S-pool. Relatively importance information can be transmitted in the P-pool compared to the S-pool. For example, a control signal, A/N, and power control information can be forwarded via the P-pool. Among a plurality of the pools, the P-pool is configured by a specific pool and the S-pool can be configured by a different specific pool. The pools, which are divided by two stages according to importance of a transmission signal, can also be divided in various forms. In particular, the importance can be divided into a plurality of stages or pools. And, the aforementioned PS/NPS classification may also correspond to a method of dividing the importance of the pools. The PS can be configured by a highest priority pool, such a control signal as A/N and power control among the NPS can be configured by a relatively high priority pool, and data can be configured by a lowest priority pool. As a different embodiment for distinguishing a primary pool from a secondary pool, pools can be divided according to a priority of the aforementioned D2D message. For example, among D2D messages, a message transmitted by a specific UE (e.g., a commander of a police officer group) is transmitted in the primary pool and messages transmitted by the rest of group members can be transmitted in the secondary pool.

A plurality of resource pools can be configured according to a delay constraint. In this case, a period of each of a plurality of the resource pools may vary. A pool in which a packet irrelevant to delay is transmitted may be different from a pool in which such a packet sensitive to delay as VoIP is transmitted.

Examples for the aforementioned proposed methods can also be included as one of implementation methods of the present invention. Hence, it is apparent that the examples are regarded as a sort of proposed schemes. The aforementioned proposed schemes can be independently implemented or can be implemented in a combined (aggregated) form of a part of the proposed schemes. It may be able to configure an eNB to inform a UE of information on whether to apply the proposed methods (information on rules of the proposed methods) via a predefined signal (e.g., physical layer signal or upper layer signal).

## Configurations of Devices for Embodiments of the Present Invention

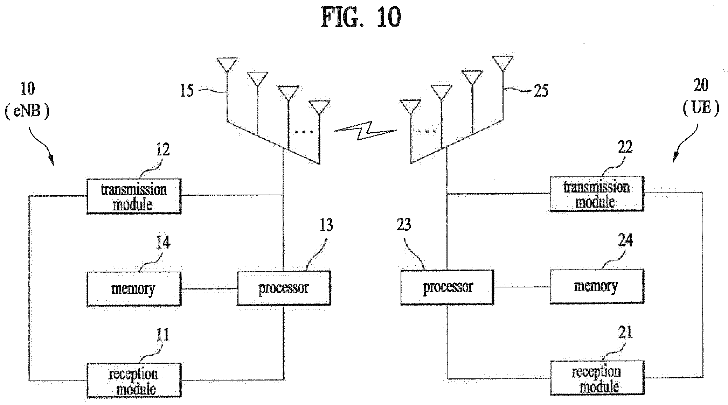

FIG. 10 is a diagram illustrating configuration of a transmit point apparatus and a UE according to one embodiment of the present invention.

Referring to FIG. 10, a transmit point apparatus 10 may include a receive module 11, a transmit module 12, a processor 13, a memory 14, and a plurality of antennas 15. The antennas 15 represent the transmit point apparatus that supports MIMO transmission and reception. The receive module 11 may receive various signals, data and information from a UE on an uplink. The transmit module 12 may transmit various signals, data and information to a UE on a downlink. The processor 13 may control overall operation of the transmit point apparatus 10.

The processor 13 of the transmit point apparatus 10 according to one embodiment of the present invention may perform processes necessary for the embodiments described above.

Additionally, the processor 13 of the transmit point apparatus 10 may function to operationally process information received by the transmit point apparatus 10 or information to be transmitted from the transmit point apparatus 10, and the memory 14, which may be replaced with an element such as a buffer (not shown), may store the processed information for a predetermined time.

Referring to FIG. 10, a UE 20 may include a receive module 21, a transmit module 22, a processor 23, a memory 24, and a plurality of antennas 25. The antennas 25 represent the UE that supports MIMO transmission and reception. The receive module 21 may receive various signals, data and information from an eNB on a downlink. The transmit module 22 may transmit various signals, data and information to an eNB on an uplink. The processor 23 may control overall operation of the UE 20.

The processor 23 of the UE 20 according to one embodiment of the present invention may perform processes necessary for the embodiments described above.

Additionally, the processor 23 of the UE 20 may function to operationally process information received by the UE 20 or information to be transmitted from the UE 20, and the memory 24, which may be replaced with an element such as a buffer (not shown), may store the processed information for a predetermined time.

The configurations of the transmit point apparatus and the UE as described above may be implemented such that the above-described embodiments can be independently applied or two or more thereof can be simultaneously applied, and description of redundant parts is omitted for clarity.

Description of the transmit point apparatus 10 in FIG. 10 may be equally applied to a relay as a downlink transmitter or an uplink receiver, and description of the UE 20 may be equally applied to a relay as a downlink receiver or an uplink transmitter.

The embodiments of the present invention may be implemented through various means, for example, hardware, firmware, software, or a combination thereof.

When implemented as hardware, a method according to embodiments of the present invention may be embodied as one or more application specific integrated circuits (ASICs), one or more digital signal processors (DSPs), one or more digital signal processing devices (DSPDs), one or more programmable logic devices (PLDs), one or more field programmable gate arrays (FPGAs), a processor, a controller, a microcontroller, a microprocessor, etc.

When implemented as firmware or software, a method according to embodiments of the present invention may be embodied as a module, a procedure, or a function that performs the functions or operations described above. Software code may be stored in a memory unit and executed by a processor. The memory unit is located at the interior or exterior of the processor and may transmit and receive data to and from the processor via various known means.

Preferred embodiments of the present invention have been described in detail above to allow those skilled in the art to implement and practice the present invention. Although the preferred embodiments of the present invention have been described above, those skilled in the art will appreciate that various modifications and variations can be made in the present invention without departing from the spirit or scope of the invention. For example, those skilled in the art may use a combination of elements set forth in the above-described embodiments. Thus, the present invention is not intended to be limited to the embodiments described herein, but is intended to accord with the widest scope corresponding to the principles and novel features disclosed herein.

The present invention may be carried out in other specific ways than those set forth herein without departing from the spirit and essential characteristics of the present invention. Therefore, the above embodiments should be construed in all aspects as illustrative and not restrictive. The scope of the invention should be determined by the appended claims and their legal equivalents, and all changes coming within the meaning and equivalency range of the appended claims are intended to be embraced therein. The present invention is not intended to be limited to the embodiments described herein, but is intended to accord with the widest scope consistent with the principles and novel features disclosed herein. In addition, claims that are not explicitly cited in each other in the appended claims may be presented in combination as an embodiment of the present invention or included as a new claim by subsequent amendment after the application is filed.

INDUSTRIAL APPLICABILITY

The embodiments of the present invention can be applied to various mobile communication systems.

**Claims**

1. A method of transmitting a signal, which is transmitted by a D2D (device to device) user equipment in a wireless communication system, comprising the steps of:

   determining a resource pool from among resource pools classified according to a priority;
   determining a resource for transmitting a D2D packet by applying a priority of the D2D packet to the determined resource pool; and
   transmitting the D2D packet through the determined resource.

2. The method of claim 1, wherein a TRP (time resource pattern) is used when the resource for transmitting the D2D packet is determined.

3. The method of claim 2, wherein the TRP is contained in a TRP subset which is classified according to the priority of the D2D packet.

4. The method of claim 2, wherein the TRP corresponds to a bitmap indicating a subframe in which transmission of a D2D signal is permitted.

5. The method of claim 2, wherein if the priority of the D2D packet is greater, a TRP containing more 1's is used.

6. The method of claim 5, wherein if the TRP containing more 1's is used, the number of repetitive transmission per MAC PDU (medium access layer protocol data unit) increases as well.

7. The method of claim 1, wherein if the D2D packet corresponds to an MCPTT (mission critical push to talk) packet, the D2D packet has a highest priority.

8. A user equipment transmitting a D2D (device to device) signal in a wireless communication system, comprising:

   a transmitter and a receiver; and
   a processor, the processor configured to determine a resource pool from among resource pools classified according to a priority, the processor configured to determine a resource for transmitting a D2D packet by applying a priority of the D2D packet to the determined resource pool, the processor configured to transmit the D2D packet through the determined resource.

9.  The D2D user equipment of claim 8, wherein a TRP (time resource pattern) is used when the resource for transmitting the D2D packet is determined.

10. The D2D user equipment of claim 9, wherein the TRP is contained in a TRP subset which is classified according to the priority of the D2D packet.

11. The D2D user equipment of claim 9, wherein the TRP corresponds to a bitmap indicating a subframe in which transmission of a D2D signal is permitted.

12. The D2D user equipment of claim 9, wherein if the priority of the D2D packet is higher, a TRP containing more 1's is used.

13. The D2D user equipment of claim 12, if the TRP containing more 1's is used, the number of repetitive transmission per MAC PDU (medium access layer protocol data unit) increases as well.

14. The D2D user equipment of claim 8, wherein if the D2D packet corresponds to an MCPTT (mission critical push to talk) packet, the D2D packet has a highest priority.

FIG. 1

# FIG. 2

One downlink slot

7 OFDM symbols

Resource block
12×7 Resource element

Resource element

$N^{DL} \times 12$ subcarriers

12 subcarriers

# FIG. 3

Control region    Data region

First slot    Second slot

Frequency

One subframe

Time

# FIG. 4

Control region

Data region

RB pair

One slot    One slot

Frequency

Subframe

Time

# FIG. 5

D2DSS

eNB

D2D UE in coverage

D2D UE outside coverage

eNB synch coverage

# FIG. 6

eNB

UE1

UE2

(a)

Frequency

| Unit # $(N_F-1)$ | Unit # $(2N_F-1)$ |

| Unit # 1 | Unit # $(N_F+1)$ |

| Unit # 0 | Unit # $N_F$ |

| Unit # $(N_F*N_T-1)$ | Unit # $(N_F-1)$ |

| Unit # $(N_F*N_T-N_F+1)$ | Unit # 1 |

| Unit # $(N_F*N_T-N_F)$ | Unit # 0 |

Time

D2D signal transmission from a UE allocated with unit # 0

(b)

# FIG. 7

# FIG. 8

(a) Conventional

(b) Proposed

## FIG. 9

(a)

UL subframes

Resource pool bitmap

Group resource bitmap (e.g. 1111000011111···)

T-RPT (e.g. k=4, N=8, 10101001)

N=8

(b)

UL subframes

Resource pool bitmap

Group resource bitmap (e.g. 11110000)

T-RPT (e.g. k=4, N=8, 10101001)

N=8

: actual transmission subframe

# FIG. 10

## INTERNATIONAL SEARCH REPORT

| International application No. |
|---|
| PCT/KR2015/010221 |

**A.   CLASSIFICATION OF SUBJECT MATTER**

*H04W 72/04(2009.01)i, H04W 72/12(2009.01)i*

According to International Patent Classification (IPC) or to both national classification and IPC

**B.   FIELDS SEARCHED**

Minimum documentation searched (classification system followed by classification symbols)
H04W 72/04; H04W 72/12

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: D2D, priority order, resource pool, D2D packet, resource, TRP(time resource pattern), MAC pdu, the number of repeat transmission, MCPTT(mission critical push to talk)

**C.   DOCUMENTS CONSIDERED TO BE RELEVANT**

| Category* | Citation of document, with indication, where appropriate, of the relevant passages | Relevant to claim No. |
|---|---|---|
| Y | INTEL CORPORATION, "Resource Allocation for Mode-1 D2D Operation", R1-142872, 3GPP TSG RAN WG1 Meeting #78, 10 August 2014 See pages 2, 6. | 1-4,8-11 |
| A | | 5-7,12-14 |
| Y | HUAWEI et al., "Mode 2 resource allocation for D2D", R1-142839, 3GPP TSG RAN WG1 Meeting #78, 10 August 2014 See page 1. | 1-4,8-11 |
| A | SHARP, "D2D Grant Design for T-RPT", R1-143209, 3GPP TSG RAN WG1 Meeting #78, 10 August 2014 See pages 2, 3. | 1-14 |
| A | SAMSUNG, "RSRP based resource grouping for D2D type-1 discovery", R1-143093, 3GPP TSG RAN WG1 #78, 10 August 2014 See page 2. | 1-14 |
| A | CATT, "RPT design for broadcast communication", R1-142077, 3GPP TSG RAN WG1 Meeting #77, 10 May 2014 See pages 1, 2. | 1-14 |

☐  Further documents are listed in the continuation of Box C.      ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 JANUARY 2016 (13.01.2016) | **14 JANUARY 2016 (14.01.2016)** |

| Name and mailing address of the ISA/KR | Authorized officer |
|---|---|
| Korean Intellectual Property Office Government Complex-Daejeon, 189 Seonsa-ro, Daejeon 302-701, Republic of Korea | |
| Facsimile No.  82-42-472-7140 | Telephone No. |

Form PCT/ISA/210 (second sheet) (January 2015)

INTERNATIONAL SEARCH REPORT
Information on patent family members

International application No.

PCT/KR2015/010221

| Patent document cited in search report | Publication date | Patent family member | Publication date |
|---|---|---|---|

NONE

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2015004319 W